# FASCICULE DE BREVET EUROPEEN

(11) **EP 1 843 653 B1**
(45) Date de publication et mention de la délivrance du brevet: **06.08.2008**
(21) Numéro de dépôt: 06709397.1
(22) Date de dépôt: 10.01.2006
(51) Int. Cl.: A01D 34/66

(54) **FAUCHEUSE AVEC UN DISPOSITIF DE DEPLIAGE ET DE REPLIAGE PERFECTIONNE**
MÄHMASCHINE MIT VERBESSERTER AUS- UND EINFALTVORRICHTUNG
MOWER PROVIDED WITH AN IMPROVED FOLDING AND UNFOLDING DEVICE

(30) Priorité: 26.01.2005 FR 0550219
(43) Date de publication de la demande: 17.10.2007
(73) Titulaire: KUHN S.A., 67706 Saverne Cedex (FR)
(72) Inventeur: WOLFF, Michel, F-67670 Waltenheim Sur Zorn (FR)
(74) Mandataire: Andres, Jean-Claude
(86) Numéro de dépôt international: PCT/FR2006/050009
(87) Numéro de publication internationale: WO 2006/079735

(56) Documents cités:
- DE-A1- 19 534 695
- FR-A- 2 635 433

## Description

L'invention concerne le domaine des machines agricoles, plus particulièrement celui des faucheuses.

Les faucheuses sont connues par plusieurs documents et notamment par les brevets EP 839 443, EP 809 928 ou FR 2 635 433 de la demanderesse. Ces machines sont fixées au système de relevage d'un tracteur au moyen d'un bâti avec un cadre trois points pour l'accouplement.

En configuration de transport, la barre de coupe est repliée à l'arrière du tracteur pour un encombrement minimal autorisant le déplacement du véhicule sur les routes.

En configuration de travail, la barre de coupe est déployée latéralement par rapport au tracteur de manière à effectuer le fauchage des plantes.

Pour des raisons de productivité maximale l'emploi de barres supportant un nombre élevé d'outils de coupe est recherché, c'est-à-dire une longueur de barre aussi grande que cela est techniquement réalisable.

Pour des barres de coupe de grandes dimensions le problème de l'encombrement de la faucheuse en configuration de transport se pose.

Pour tenter de résoudre ce problème il a été proposé des barres de coupe repliables vers l'arrière. Cette solution convient pour des machines avec barres de dimensions moyennes, mais pas pour des machines avec des barres très longues, en raison de l'éloignement du tracteur de leur centre de gravité.

Pour des barres de coupe plus longues le repliement de la barre vers le haut, à la verticale, a été une solution intéressante, toutefois là encore la dimension admissible pour le transport a été limitative et de nouvelles solutions ont été étudiées.

Récemment le brevet DE 195 34 695 a proposé de replier la barre de coupe au-delà de la verticale, en un angle de 105° à 150°, cette configuration permettant de placer l'outil de coupe en diagonale par rapport au tracteur et donc d'employer une barre de coupe plus longue. Pour atteindre cette configuration la machine décrite dispose de deux vérins hydrauliques à simple effet assurant l'un le déplacement jusqu'à la position verticale et l'autre le déplacement au-delà de cette position en freinant la descente.

L'utilisation de deux vérins à simple effet entre le bâti et la barre de coupe nécessite un cadre porteur et un agencement complexe des vérins pour effectuer les différents déplacements de la barre de coupe avec le protecteur, cette solution est coûteuse et peu fonctionnelle.

Les articulations qui permettent le déploiement et le repliement de la barre de coupe des faucheuses posent de plus des problèmes de sécurité dans les différentes configurations de fonctionnement. II est par exemple souhaitable que la configuration de travail, c'est-à-dire lorsque les outils de coupe sont activés, puisse être dégagée rapidement de la position horizontale, pour le passage d'un obstacle ou une manoeuvre du tracteur, par exemple, sans qu'il soit nécessaire d'activer la configuration de transport. Dans cette configuration dite de manoeuvre des sécurités doivent être prévues pour éviter des déplacements intempestifs de la barre de coupe.

Le problème de la fonctionnalité et du repliement - déploiement de la barre de coupe au moyen d'une articulation peu coûteuse disposant des sécurités nécessaires à la fois pour les configurations de transport, de travail ou de manoeuvre, se pose.

L'invention a pour objectif de résoudre ces principales difficultés en proposant une articulation actionnée par un seul vérin hydraulique à double effet.

La présente invention concerne donc une faucheuse comportant un bâti pouvant être accouplé à un tracteur et portant un étançon sur lequel est articulée une barre de coupe pouvant être amenée d'une configuration de travail dans au moins une configuration de transport et inversement au moyen d'un dispositif de dépliage et de repliage, caractérisée par le fait que ledit dispositif de dépliage et de repliage comprend :
- un élément basculant relié à l'étançon et au bâti,
- une bielle reliée à la barre de coupe,
- un vérin à double effet positionné entre ledit élément basculant et ladite bielle.

Une telle articulation de la barre de coupe, disposant d'un vérin à double effet selon l'invention, présente de multiples avantages :
- L'ensemble de coupe est plus léger et moins coûteux à fabriquer puisqu'un seul vérin à double effet peut être utilisé.
- Le mécanisme permet de passer aisément d'une configuration de travail à une configuration de manoeuvre ou l'inverse.
- Chaque configuration peut disposer des moyens de sécurité qui évitent des déplacements non souhaités de la barre de coupe.
- II est avantageusement possible d'avoir une sécurité supplémentaire, dans la configuration de transport, lorsque la barre de coupe se situe au-delà de la verticale, pour palier à la défaillance du circuit hydraulique du tracteur et donc à la chute et à la détérioration de l'outil dans cette éventualité.

D'autres caractéristiques et avantages de l'invention se dégageront de la description qui va suivre en regard des dessins annexés qui ne sont donnés qu'à titre d'exemples non limitatifs.
La figure 1 est une vue d'ensemble par l'arrière d'un tracteur disposant d'une faucheuse comprenant un dispositif de dépliage et repliage de la barre de coupe selon l'invention, en configuration de transport.
La figure 2 est une vue de dessus et en perspective du dispositif de dépliage et repliage de la barre de coupe.
La figure 3 illustre une vue de côté du dispositif en configuration de transport.
Les figures 4 à 7 sont des positions intermédiaires entre la configuration de transport et la configuration de travail, obtenues aussi bien au dépliage qu'au repliage de la barre de coupe.
La figure 8 correspond à la configuration de travail de la faucheuse.
Les figures 9 et 10 sont des positions intermédiaires entre la configuration de travail et la configuration de manoeuvre.
La figure 11 illustre le dispositif de dépliage et repliage de la barre de coupe en configuration de manoeuvre.
La figure 12 présente une vue de côté de la came portée par le protecteur.
La figure 13 montre une vue partielle en perspective de la bielle et du protecteur.

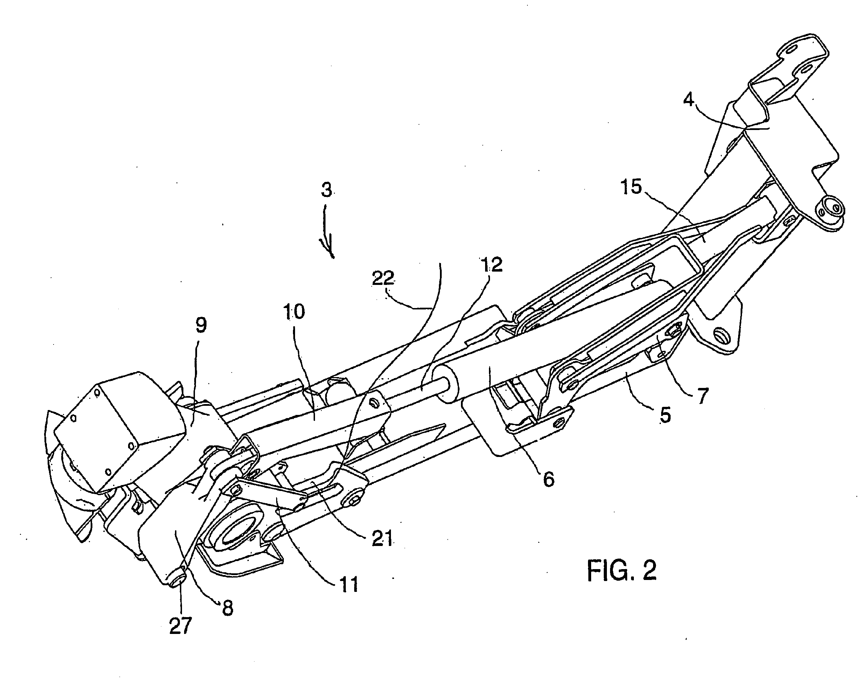

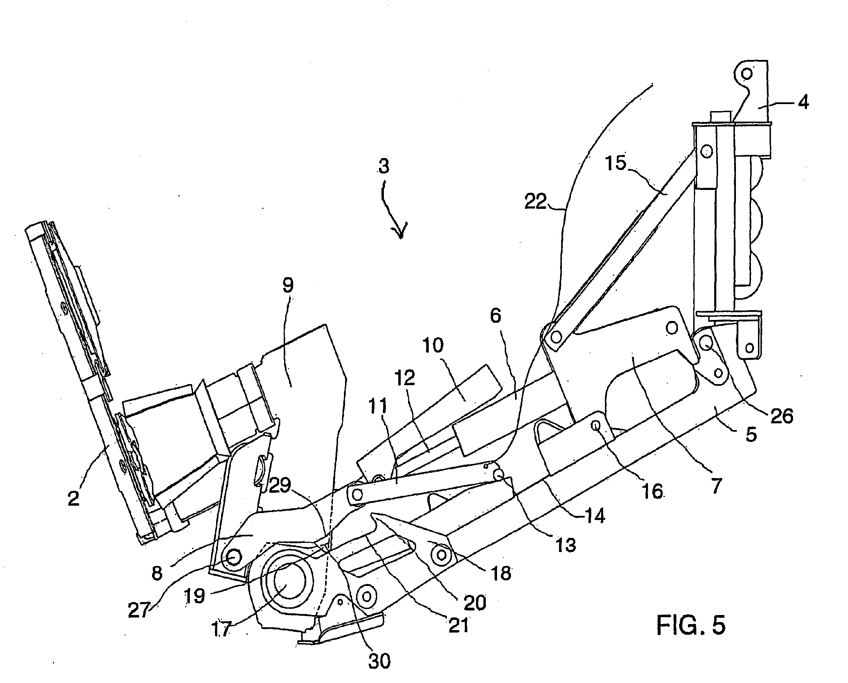

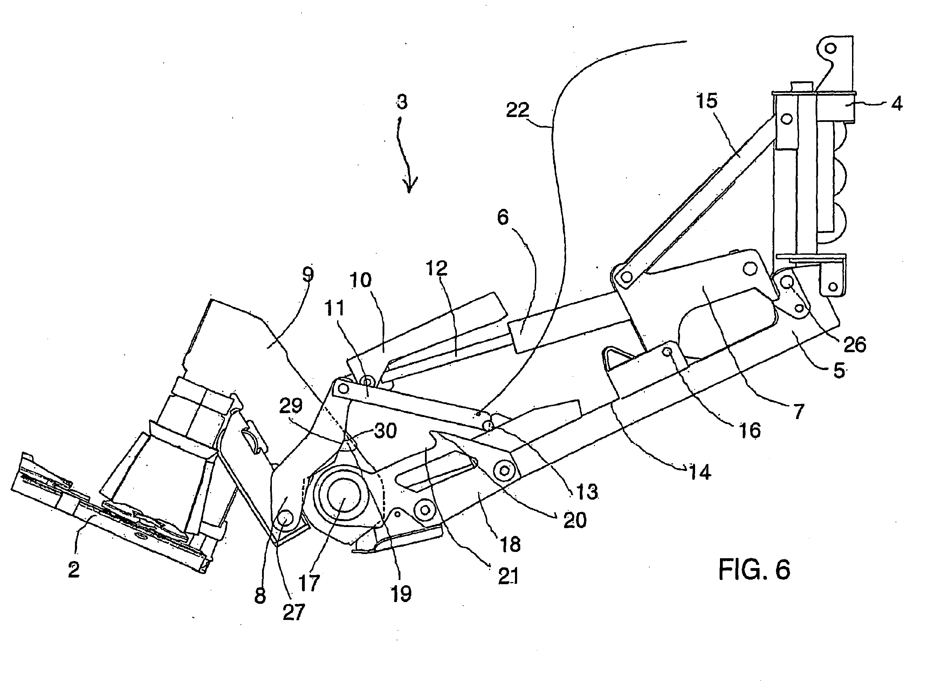

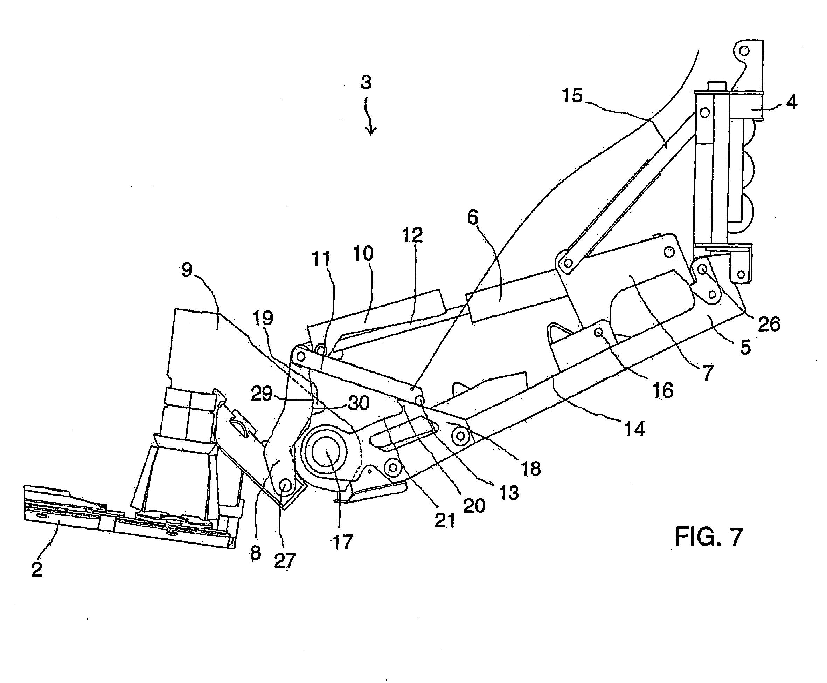

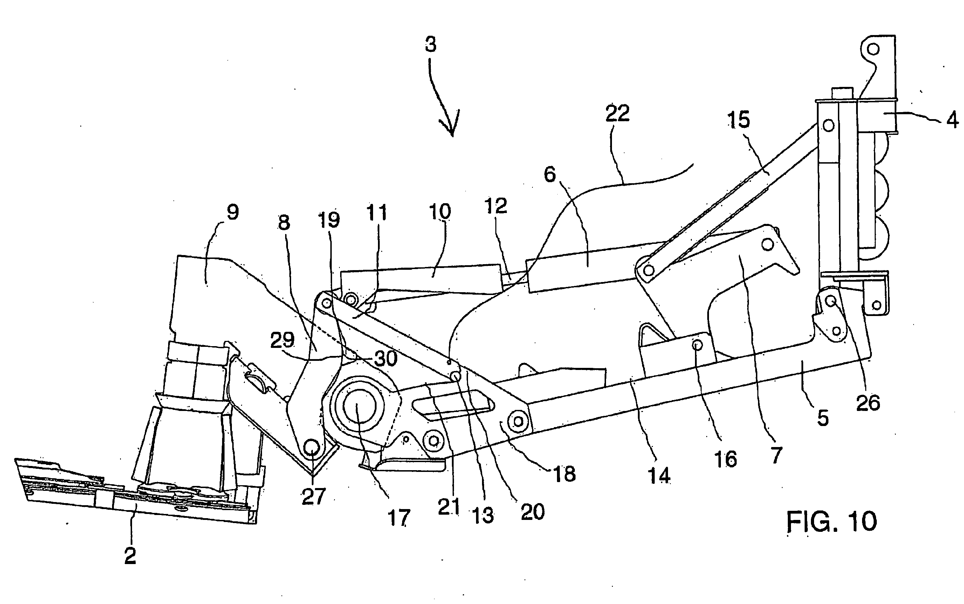

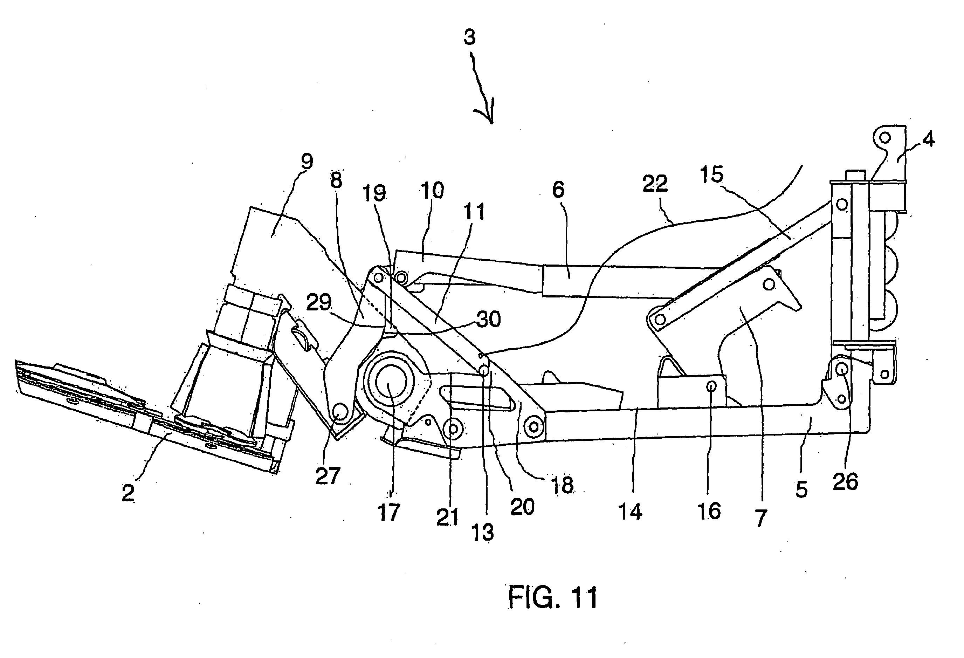

La faucheuse selon l'invention possède une barre de coupe 2 formée par un carter de forme allongée portant plusieurs outils de coupe rotatifs 25. Ces derniers peuvent être entraînés en rotation d'une manière connue en soi à partir d'un tracteur. Sur les figures 2 à 11 le système de transmission permettant le fonctionnement des outils de coupe 25 et les diverses protections de la faucheuse n'ont pas été représentées pour faciliter la compréhension de l'invention.

La barre de coupe 2 comporte un boîtier de renvoi de l'entraînement 9 qui est relié au moyen d'une articulation 17 sensiblement horizontale à un étançon 5. Celui-ci est par ailleurs articulé par l'intermédiaire d'un axe 26 sensiblement horizontal sur un bâti 4 équipé d'une manière connue en soi d'un cadre trois points pour l'accouplement au système de relevage du tracteur.

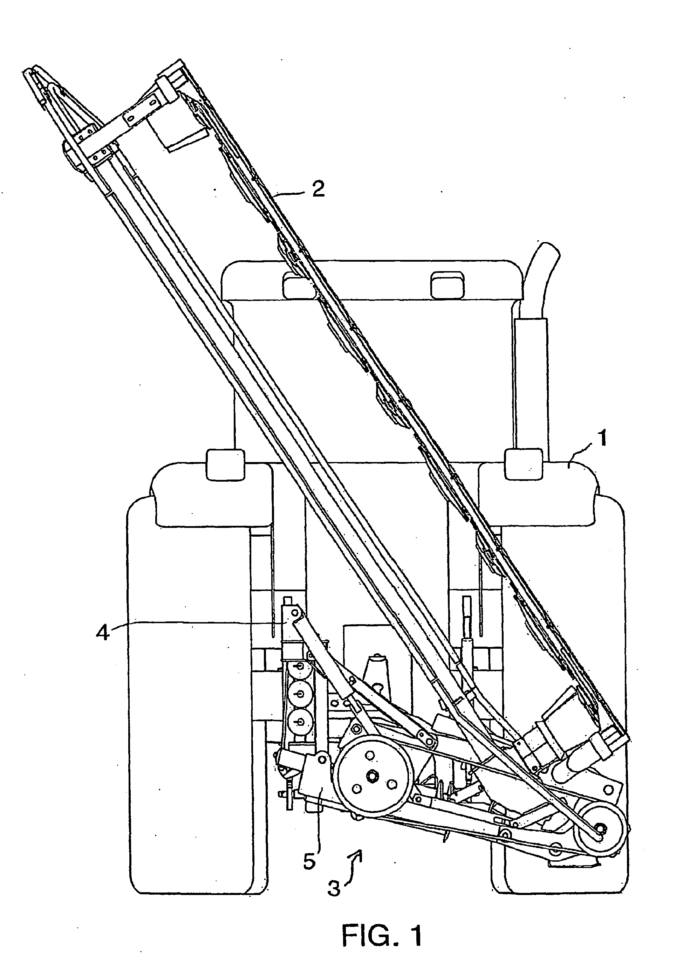

La figure 1 illustre la position de la faucheuse en configuration de transport, c'est-à-dire repliée à l'arrière du tracteur 1, dans un plan diagonal. La barre de coupe 2 est pivotée à sensiblement 125° par rapport à l'horizontale et par rapport à la configuration de travail.

Un dispositif 3 de dépliage et repliage de la barre de coupe 2 se situe entre cette dernière et le bâti 4.

Le dispositif 3 selon l'invention permet le dépliage de la barre de coupe 2 depuis la configuration de transport jusqu'à la configuration de travail située à l'horizontale.

Le dispositif 3 permet également le passage à une configuration dite de manoeuvre dans laquelle la barre de coupe est soulevée et dégagée du champ de manière à autoriser les manoeuvres du tracteur, par exemple, pour faire demi-tour, ou pour le passage au-dessus d'un andain voire d'un obstacle pouvant endommager les éléments de coupe.

Le dispositif 3 permet également le repliement de la barre de coupe 2 de la configuration de travail à la configuration de transport.

Les différents mouvements de la barre de coupe 2 sont commandés directement par le conducteur du tracteur depuis sa cabine.

La figure 2 illustre l'agencement des différents éléments essentiels du dispositif de dépliage et repliage de la barre de coupe 2 et notamment, l'étançon 5 fixé sur le bâti 4, un vérin 6 à double effet fixé par un axe 28 sur un élément basculant 7, pour sa partie la plus proche du tracteur, et sur une bielle 8 pour sa partie la plus éloignée. Ladite bielle 8 est elle-même articulée sur le boîtier de renvoi de l'entraînement 9 au moyen d'un axe 27 sensiblement horizontal.

Cette figure 2 montre également le protecteur 10 fixé sur l'extrémité du vérin 6 proche de la bielle 8 ainsi que le bras de sécurité 11 articulé avec ladite bielle.

Le dispositif 3 de dépliage et de repliage de la barre de coupe 2 de la faucheuse présente trois configurations principales : une configuration de transport, une configuration de travail et une configuration de manoeuvre, dans chaque configuration le débattement autorisé pour la barre de coupe 2 est conditionné par la possibilité de déplacement du protecteur 10 ou/et du bras de sécurité 11.

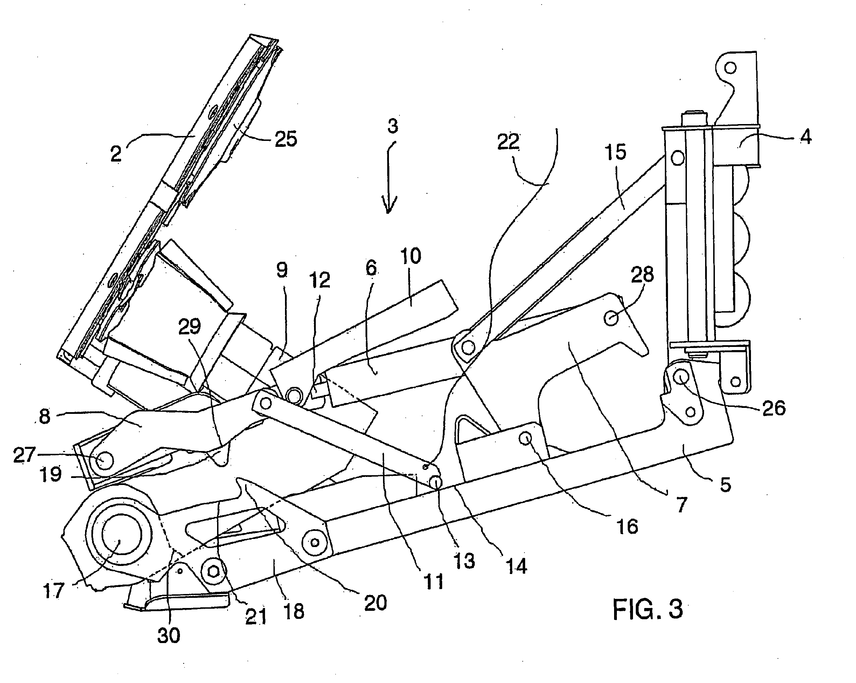

Pour mieux comprendre le fonctionnement du dispositif de dépliage et repliage de la barre de coupe 2 selon l'invention il est fait référence aux figures 3 à 11 qui présentent les différents éléments essentiels en vues de côté dans les différentes configurations d'utilisation et dans des positions intermédiaires.

La figure 3 illustre la configuration de transport de la faucheuse avec le piston 12 du vérin 6 rentré au maximum. Dans cette position l'action du vérin 6 a pour effet de placer l'élément basculant 7 dans une position relevée et la bielle 8 dans une position sensiblement parallèle au plan de l'étançon 5. L'extrémité coulissante 13 du bras de sécurité 11 se trouve dans une encoche 14 aménagée sur l'étançon.

L'élément basculant 7 est relié au moyen de l'axe 16 avec l'étançon 5 et par l'intermédiaire d'un soutien 15 au bâti 4. Selon le sens d'action du vérin 6 l'élément basculant 7 pivote dans un sens ou dans l'autre autour de l'axe 16, ce qui a pour effet de faire monter ou descendre l'étançon 5 par rapport à l'horizontale, soit donc de monter ou d'abaisser la barre de coupe 2 lorsqu'elle est dépliée en configuration de travail. Ledit élément basculant 7 limite ainsi le débattement de l'étançon 5 autour de l'axe 26.

La bielle 8 située à l'extrémité opposée du vérin 6, par rapport à l'élément basculant 7, assure l'interface entre la barre de coupe 2 avec son boîtier de renvoi de l'entraînement 9 et le vérin 6.

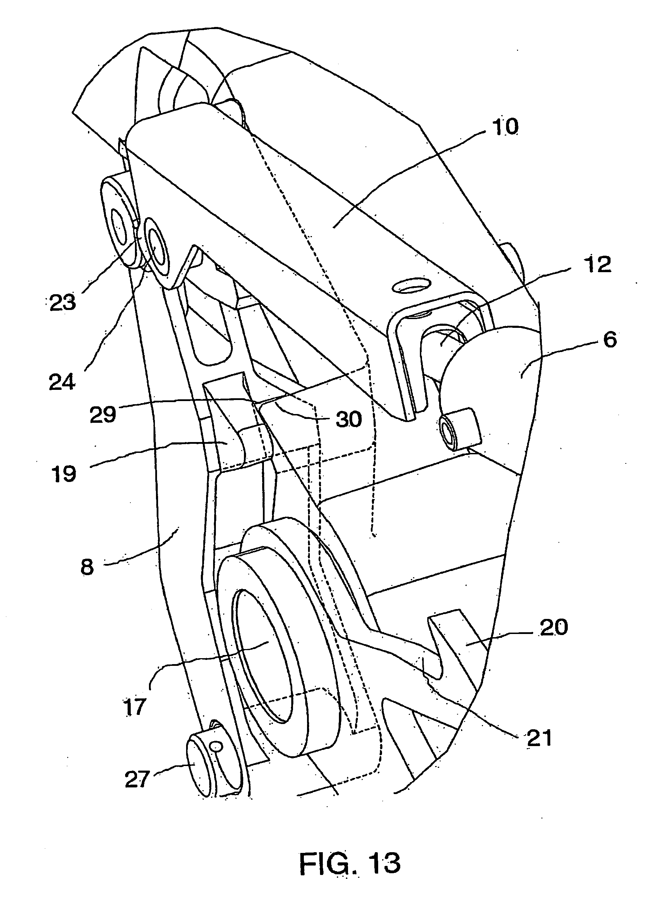

La bielle 8 se déplace en rotation autour de l'axe 27 et s'appuie avec sa face 29 contre une partie 30 formant une butée prévue sur le boîtier 9 (voir fig. 13) pour contrôler le déplacement de la barre de coupe 2 autour de l'articulation 17, de la position horizontale jusque vers la position verticale et inversement.

La bielle 8 porte un bras de sécurité 11 destiné à coopérer avec une nervure 21 et une butée 20 portée par l'extrémité antérieure 18 de l'étançon 5.

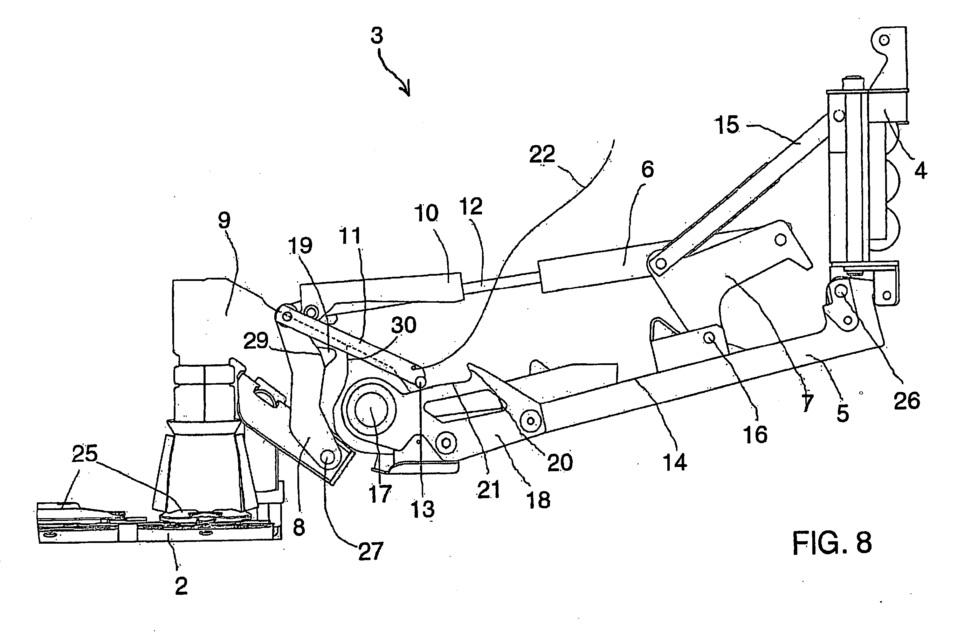

Ce bras de sécurité 11 dispose d'un débattement important entre la configuration de transport illustrée sur la figure 3 et la configuration de travail illustrée sur la figure 8.

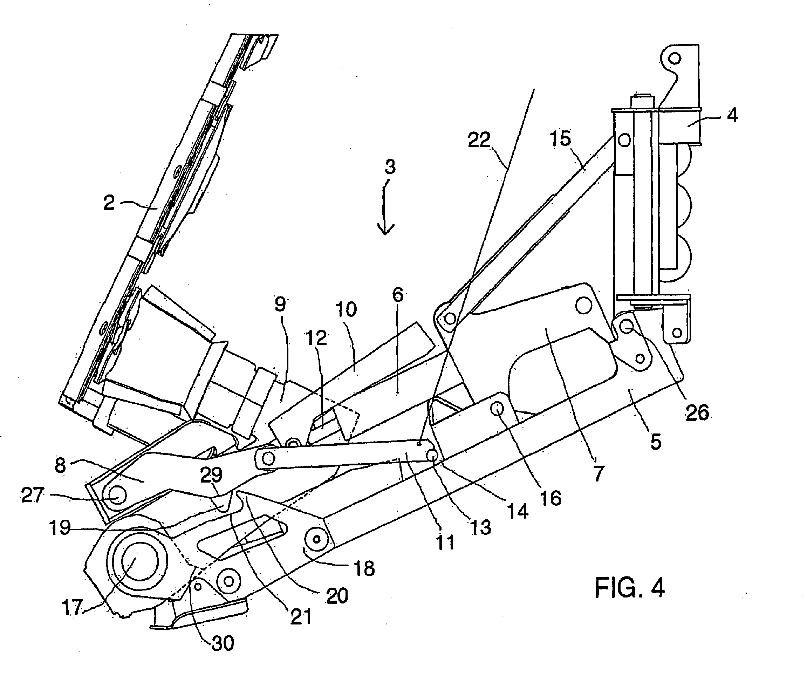

La bielle 8 comporte en sus une excroissance 19 qui bute sur la nervure 21 de l'étançon 5 lorsque la barre de coupe 2 se trouve en position verticale ou près de celle-ci. Cette position intermédiaire est représentée sur la figure 4.

Sur l'extrémité antérieure du vérin 6, à proximité de la bielle 8, est fixé un protecteur 10 dont la forme en U inversé est bien visible sur la figure 13.

Cette pièce est destinée à bloquer la course du piston 12 et donc faire pivoter l'élément basculant 7 vers l'avant et remonter l'étançon 5 vers l'horizontale par pivotement autour de l'axe 26, lors du passage de la configuration de travail à la configuration de manoeuvre.

Dans la configuration de transport la barre de coupe 2 est retenue par le vérin 6 à double effet, toutefois en cas de rupture accidentelle du circuit hydraulique l'extrémité coulissante 13 serait bloquée dans l'encoche 14 empêchant le mouvement de chute et de dépliage de la barre de coupe 2.

Les figures 4 à 7 illustrent des positions intermédiaires aussi bien en dépliage qu'en repliage entre la configuration de transport précédemment décrite et la configuration de travail illustrée sur la figure 8.

Au cours du déplacement dans le sens du dépliage le vérin 6 est commandé pour qu'il s'allonge et pousse sur la bielle 8. La barre de coupe 2 décrit alors une rotation antihoraire autour de l'axe 17, lequel axe est porté par l'extrémité antérieure 18 de l'étançon 5. Le bras de sécurité 11 est retiré de l'encoche 14 à l'aide du câble 22. Ensuite il est entraîné dans ce mouvement, se déplace le long de l'étançon, et passe la butée 20 pour atteindre la configuration de travail. Dans cette configuration de travail le piston du vérin 6 est dans une extension maximale ayant entraîné le pivotement de l'élément basculant 7 vers l'avant en bout de course.

Tel que cela est visible sur la figure 8 la barre de coupe 2 est en position horizontale dans la configuration de travail et l'étançon 5 est partiellement remonté vers la position horizontale sous l'action combinée du vérin 6 et de l'élément basculant 7. Ladite barre de coupe 2 s'étend latéralement au tracteur et peut suivre la surface du sol en vue du fauchage des plantes sur pied.

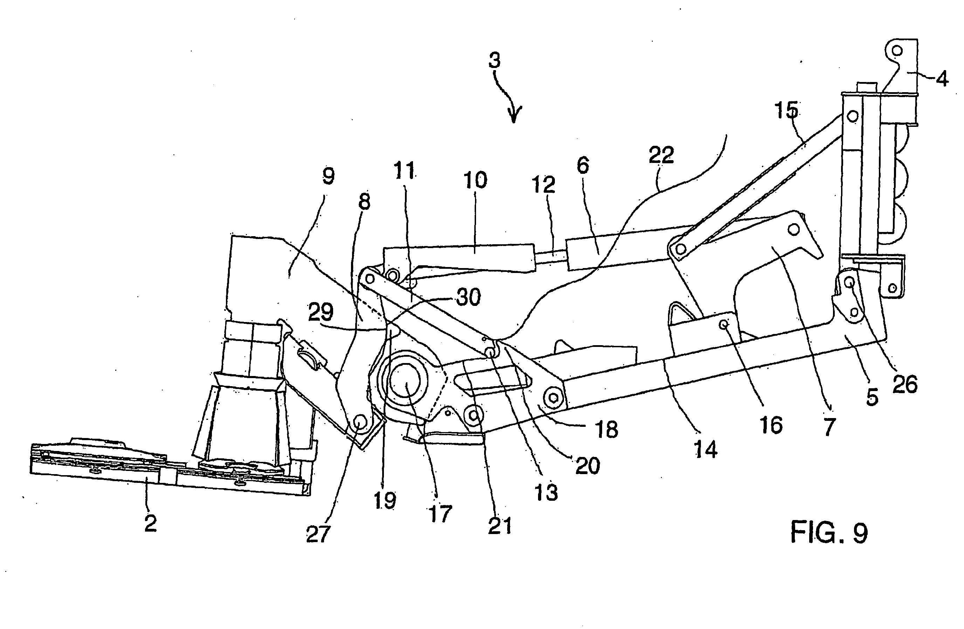

Les figures 9 à 11 illustrent le passage de la configuration de travail à la configuration de manoeuvre dans laquelle la barre de coupe 2 et l'étançon 5 sont soulevés pour être dégagé du sol.

Sous l'action du vérin 6 qui est commandé pour qu'il se raccourcisse, la bielle 8 s'appuie contre la butée 30 et opère une rotation horaire du boîtier 9 et de la barre 2 autour de l'axe 17, dans le sens opposé à celui de la manoeuvre de dépliage. Le bras de sécurité 11 coulisse dans la nervure 21 jusqu'à atteindre la butée 20 qui bloque sa course et entraîne en conséquence une traction accrue sur l'élément basculant 7, laquelle traction a pour effet de remonter l'étançon 5 en position horizontale. Ledit blocage immobilise également la bielle 8 de sorte que celle-ci ne dégage pas le protecteur 10 du vérin 6.

La course du piston 12 en raccourcissement est alors bloquée par le protecteur 10 appuyant sur le corps du vérin 6 ce qui limite tout déplacement de la barre de coupe 2 par rapport au bâti 4.

Lorsque le conducteur du tracteur souhaite passer de la configuration de travail à la configuration de transport il opère de la même manière que celle décrite ci-dessus. II est toutefois nécessaire d'actionner un câble 22 fixé à proximité de l'extrémité coulissante 13 du bras de sécurité 11 pour le faire pivoter vers le haut et lui permettre de passer la butée 20. Ce câble 22 qui s'étend jusqu'à la cabine du tracteur est actionné par le conducteur.

Sous l'action du vérin 6 et du raccourcissement du piston 12, une fois la butée 20 franchie, le bras de sécurité 11 poursuit le même chemin que lors du dépliage de la barre de coupe 2, en sens inverse, pour atteindre l'encoche 14 en bout de course.

Le protecteur 10 dispose d'une came 23 fonctionnant en synergie avec la bielle 8 de manière à ce que ledit protecteur se soulève automatiquement lors de l'opération de repliage de la barre de coupe 2 et le placement en configuration de transport, ainsi ledit protecteur 10 ne bloque pas le piston 12 dans sa course dans cette position.

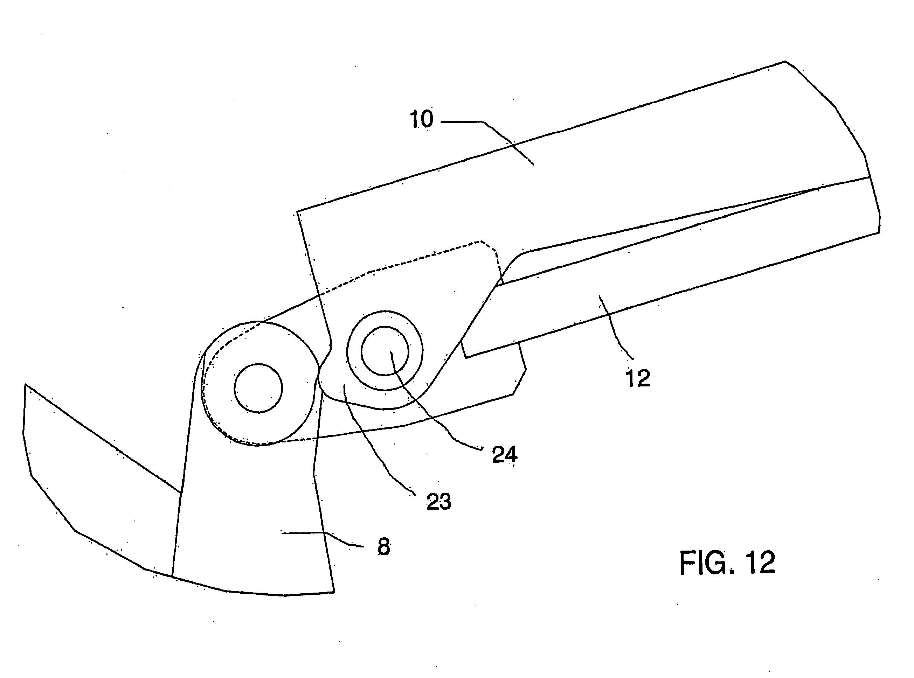

L'illustration de cette came 23 représentée sur la figure 12 permet de comprendre que lorsque le câble 22 est actionné et que le bras de sécurité 11 passe au-dessus de la butée 20 la bielle 8 se trouve positionnée de telle manière que le protecteur 10 est entraîné en rotation antihoraire autour de l'axe 24, et donc soulevé pour ne pas bloquer la course du piston 12.

Au cours des phases de dépliage et de repliage l'élément basculant 7 se stabilise en butant contre l'extrémité de l'étançon 5 qui est articulée sur le bâti 4.

La figure 13 illustre en perspective la bielle 8 et le protecteur 10 pour une meilleure compréhension du mécanisme de fonctionnement précédemment décrit, sur ce schéma le bras de sécurité 11 n'a pas été représenté pour améliorer la clarté de la figure.

Plusieurs variantes sont possibles quant aux outils de coupe 25 portés par la barre de coupe 2 ou au dispositif d'accouplement entre lesdits outils et le mécanisme d'entraînement disposé sur le tracteur, sans sortir du cadre de l'invention.

II peut être envisagé diverses variantes quant aux formes, aux dimensions et aux matériaux utilisés pour réaliser les pièces constitutives du dispositif de dépliage et de repliage de la barre de coupe 2 de la faucheuse sans sortir du cadre de l'invention.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Faucheuse comportant un bâti (4) pouvant être accouplé à un tracteur et portant un étançon (5) sur lequel est articulée une barre de coupe (2) pouvant être amenée d'une configuration de travail dans au moins une configuration de transport et inversement au moyen d'un dispositif (3) de dépliage et de repliage, **caractérisée par le fait que** ledit dispositif (3) de dépliage et de repliage comprend :
- un élément basculant (7) articulé sur l'étançon (5) et relié au bâti (4),
- une bielle (8) articulée sur la barre de coupe (2),
- un vérin hydraulique (6) à double effet positionné entre ledit élément basculant (7) et ladite bielle (8).

2. Faucheuse selon la revendication 1, **caractérisée par le fait que** l'élément basculant (7) est raccordé au moyen d'un axe (16) avec l'étançon (5) et par l'intermédiaire d'un soutien (15) au bâti (4).

3. Faucheuse selon la revendication 1, **caractérisée par le fait qu'**elle présente une configuration de transport, une configuration de travail et une configuration de manoeuvre et que dans chaque configuration le débattement autorisé pour la barre de coupe (2) est conditionné par la possibilité de déplacement d'un protecteur (10) ou/et d'un bras de sécurité (11).

4. Faucheuse selon la revendication 1, **caractérisée par le fait que** la bielle (8) est articulée avec un axe (27) sur un boîtier de renvoi de l'entraînement (9) constituant une partie intégrante de la barre de coupe (2) et qui est lié à l'étançon (5) par une articulation (17).

5. Faucheuse selon la revendication 4, **caractérisée par le fait que** le boîtier de renvoi de l'entraînement (9) comporte une partie (30) formant une butée pour la bielle (8).

6. Faucheuse selon la revendication 1, **caractérisée par le fait qu'**un bras de sécurité (11) est relié à la bielle (8).

7. Faucheuse selon la revendication 6, **caractérisée par le fait que** le bras de sécurité (11) coopère avec une butée (20) disposée sur l'étançon (5) pour limiter le déplacement de la bielle (8) en configuration de manoeuvre.

8. Faucheuse selon la revendication 7, **caractérisée par le fait que** le bras de sécurité (11) est relié au moyen d'un câble (22) à la cabine du tracteur (1), ledit câble (22) permettant le pivotement dudit bras de sécurité (11) vers le haut pour passer de la configuration de travail à la configuration de transport et inversement.

9. Faucheuse selon la revendication 1, **caractérisée par le fait que** la bielle (8) comporte une excroissance (19) destinée à coopérer avec une nervure (21) portée par l'étançon (5), lorsque la barre de coupe (2) est dans une position verticale ou proche de celle-ci lors du dépliage ou du repliage.

10. Faucheuse selon la revendication 3, **caractérisée par le fait que** le vérin (6) à double effet porte à son extrémité reliée à la bielle (8) un protecteur (10) destiné à limiter le déplacement du piston (12) dans la configuration de manoeuvre.

11. Faucheuse selon la revendication 10, **caractérisée par le fait que** le protecteur (10) comporte une came (23) fonctionnant en synergie avec la bielle (8).

12. Faucheuse selon la revendication 6, **caractérisée par le fait que** le bras de sécurité (11) peut se déplacer le long de l'étançon (5) et s'enclencher dans une encoche (14) disposée sur ledit étançon (5), en configuration de transport, lorsque la barre de coupe (2) est repliée au-delà de la verticale, laquelle encoche (14) étant utile en cas de rupture du circuit hydraulique et de défaillance du vérin (6) à double effet pour éviter la chute de la barre de coupe (2).

## Claims

1. Mower comprising a supporting structure (4) that can be coupled to a tractor and bears a support (5) to which there is articulated a cutter bar (2) that can be brought from a work configuration into at least one transport configuration and vice versa using an unfolding and folding device (3), ***characterized in* that** the said unfolding and folding device (3) comprises:
- a tilting element (7) articulated to the support (5) and connected to the supporting structure (4),
- a link rod (8) articulated to the cutter bar (2),
- a double-acting hydraulic jack (6) positioned between the said tilting element (7) and the said link rod (8).

2. Mower according to claim 1, ***characterized in* that** the tilting element (7) is connected using an axis (16) to the support (5) and via a rest (15) to the supporting structure (4).

3. Mower according to claim 1, ***characterized in* that** it has a transport configuration, a work configuration and a maneuver configuration and **in that**, in each configuration, the amount of travel allowed to the cutter bar (2) is dependent on the possibility of movement of a protector (10) and/or of a safety arm (11).

4. Mower according to claim 1, ***characterized in* that** the link rod (8) is articulated using an axis (27) to a drive transmission box (9) which constitutes an integral part of the cutter bar (2) and which is connected to the support (5) by an articulation (17).

5. Mower according to claim 4, ***characterized in* that** the drive transmission box (9) comprises a part (30) that forms a stop for the link rod (8).

6. Mower according to claim 1, ***characterized in* that** a safety arm (11) is connected to the link rod (8).

7. Mower according to claim 6, ***characterized in* that** the safety arm (11) collaborates with a stop (20) positioned on the support (5) so as to limit the movement of the link rod (8) in the maneuvering configuration.

8. Mower according to claim 7, ***characterized in* that** the safety arm (11) is connected by means of a cable (22) to the cab of the tractor (1), the said cable (22) allowing the said safety arm (11) to pivot upwards to switch from the work configuration to the transport configuration and vice versa.

9. Mower according to claim 1, ***characterized in* that** the link rod (8) comprises a protrusion (19) intended to collaborate with a rib (21) borne by the support (5) when the cutter bar (2) is in a vertical or near-vertical position during unfolding or folding.

10. Mower according to claim 3, ***characterized in* that** the double-acting jack (6) at its end connected to the link rod (8) bears a protector (10) intended to limit the movement of the piston (12) in the maneuvering configuration.

11. Mower according to claim 10, ***characterized in* that** the protector (10) comprises a cam (23) operating together with the link rod (8).

12. Mower according to claim 6, ***characterized in* that** the safety arm (11) can move along the support (5) and engage in a notch (14) positioned on the said support (5), in the transport configuration, when the cutter bar (2) is folded beyond the vertical, which notch (14) can be used to prevent the cutter bar (2) from falling down if the hydraulic circuit bursts and the double-acting jack (6) fails.

## Patentansprüche

1. Mähmaschine mit einem Gestell (4), das an einen Traktor gekuppelt werden kann und einen Stempel (5) trägt, auf dem ein Mähbalken (2) angelenkt ist, der von einer Arbeitsausführung in mindestens eine Transportausführung und umgekehrt mittels einer Vorrichtung (3) zum Ausklappen und Einklappen gebracht werden kann, ***dadurch gekennzeichnet,* dass** die Vorrichtung (3) zum Ausklappen und Einklappen
- ein Schwenkelement (7), das am Stempel (5) angelenkt und mit dem Gestell (4) verbunden ist,
- eine Stange (8), die an dem Mähbalken (2) angelenkt ist,
- einen Zylinder (6) mit Doppelwirkung, der zwischen dem Schwenkelement (7) und der Stange (8) angeordnet ist, umfasst.

2. Mähmaschine nach Anspruch 1, ***dadurch gekennzeichnet,* dass** das Schwenkelement (7) mittels einer Achse (16) an den Stempel (5) und mittels einer Stütze (15) am Gestell (4) angeschlossen ist.

3. Mähmaschine nach Anspruch 1, ***dadurch gekennzeichnet,* dass** sie eine Transportausführung, eine Arbeitsausführung und eine Manöverausführung aufweist, und dass in jeder Ausführung der für den Mähbalken (2) gestattete Ausschlag durch die Möglichkeit der Verschiebung einer Schutzvorrichtung (10) und/oder eines Sicherheitsarms (11) bedingt ist.

4. Mähmaschine nach Anspruch 1, ***dadurch gekennzeichnet,* dass** die Stange (8) mit einer Achse (27) an einem Getriebekasten des Antriebs (9) angelenkt ist, der Bestandteil des Mähbalkens (2) ist und mit dem Stempel (5) durch ein Gelenk (17) verbunden ist.

5. Mähmaschine nach Anspruch 4, ***dadurch gekennzeichnet,* dass** der Getriebekasten des Antriebs (9) einen Teil (30) umfasst, der einen Anschlag für die Stange (8) bildet.

6. Mähmaschine nach Anspruch 1, ***dadurch gekennzeichnet,* dass** ein Sicherheitsarm (11) mit der Stange (8) verbunden ist.

7. Mähmaschine nach Anspruch 6, ***dadurch gekennzeichnet,* dass** der Sicherheitsarm (11) mit einem Anschlag (20) zusammenwirkt, der auf dem Stempel (5) angeordnet ist, um die Verschiebung der Stange (8) in Manöverausführung zu begrenzen.

8. Mähmaschine nach Anspruch 7, ***dadurch gekennzeichnet,* dass** der Sicherheitsarm (11) mittels eines Kabels (22) mit der Kabine des Traktors (1) verbunden ist, wobei das Kabel (22) das Schwenken des Sicherheitsarms (11) nach oben ermöglicht, um von der Arbeitsausführung in die Transportausführung und umgekehrt überzugehen.

9. Mähmaschine nach Anspruch 1, ***dadurch gekennzeichnet,* dass** die Stange (8) eine Ausstülpung (19) umfasst, die dazu bestimmt ist, mit einer Rippe (21), die vom Stempel (5) getragen wird, zusammenzuwirken, wenn der Mähbalken (2) in einer vertikalen Position oder nahe derselben beim Ausklappen oder Einklappen ist.

10. Mähmaschine nach Anspruch 3, ***dadurch gekennzeichnet,* dass** der Zylinder (6) mit Doppelwirkung an seinem Ende, das mit der Stange (8) verbunden ist, eine Schutzvorrichtung (10) trägt, die dazu bestimmt ist, die Verschiebung des Kolbens (12) in Manöverausführung zu begrenzen.

11. Mähmaschine nach Anspruch 10, ***dadurch gekennzeichnet,* dass** die Schutzvorrichtung (10) eine Nocke (23) umfasst, die in Synergie mit der Stange (8) funktioniert.

12. Mähmaschine nach Anspruch 6, ***dadurch gekennzeichnet,* dass** sich der Sicherheitsarm (11) entlang des Stempels (5) verschieben und in Transportausführung, wenn der Mähbalken (2) über die Vertikale hinaus eingeklappt ist, in eine Kerbe (14) eingreifen kann, die auf dem Stempel (5) vorgesehen ist, wobei die Kerbe (14) im Falle einer Unterbrechung des Hydraulikkreises und eines Ausfalls des Zylinders (6) mit Doppelwirkung nützlich ist, um das Herabfallen des Mähbalkens (2) zu verhindern.
